# FASCICULE DE BREVET EUROPEEN

(11) **EP 4 013 984 B1**
(45) Date de publication et mention de la délivrance du brevet: **30.08.2023**
(21) Numéro de dépôt: 20754251.5
(22) Date de dépôt: 11.08.2020
(51) Int. Cl.: F16L 11/08, F16L 33/01

(54) **EMBOUT DE CONNEXION D'UNE CONDUITE FLEXIBLE, CONDUITE FLEXIBLE ET PROCÉDÉ DE MONTAGE ASSOCIÉS**
ANSCHLUSSSPITZE FÜR EIN FLEXIBLES ROHR, ZUGEHÖRIGES FLEXIBLES ROHR UND MONTAGEVERFAHREN
CONNECTION TIP FOR A FLEXIBLE PIPE, ASSOCIATED FLEXIBLE PIPE AND MOUNTING METHOD

(30) Priorité: 12.08.2019 FR 1909156
(43) Date de publication de la demande: 22.06.2022
(73) Titulaire: TechnipFMC Subsea France, 92400 Courbevoie (FR)
(72) Inventeur: MIYAZAKI, Marcelo, Noboro, Ralim, 75015 Paris (FR); BROCHADO DOS REIS, Felipe, 22281-080 Rio de Janeiro (BR); COELHO MEDEIROS, Filipe, 1600-209 Lisboa (PT); PACHECO STIKAN, Rafael, 29101-094 Vila Velha (BR)
(74) Mandataire: Lavoix
(86) Numéro de dépôt international: PCT/EP2020/072452
(87) Numéro de publication internationale: WO 2021/028412

(56) Documents cités:
- WO-A1-99/19654
- WO-A1-2013/074098
- WO-A1-2014/001236
- WO-A1-2016/177998

## Description

La présente invention concerne un embout de connexion d'une conduite flexible de transport de fluide selon le préambule de la revendication 1.

La conduite est en particulier une conduite flexible de type non liée (« unbonded ») destinée au transport d'hydrocarbures à travers une étendue d'eau, tel qu'un océan, une mer, un lac ou une rivière, ou à l'injection d'eau pour la stimulation de puits.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, une unité flottante de production, de stockage et de déchargement (FPSO ou floating production storage and offloading en langue anglaise) ou un autre ensemble flottant.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface.

Dans certains cas, le fluide qui circule à l'intérieur de la conduite contient des liquides et des gaz agressifs comme du dioxyde de carbone (CO₂), du méthane (CH₄) ou du sulfure d'hydrogène (H₂S). Ces composés migrent depuis l'intérieur de la conduite, à travers les couches polymériques, réduisant la capacité de charge des éléments d'armures et compromettant l'intégrité de la conduite flexible.

Pour surmonter ce problème, WO 2017/211842 décrit une conduite flexible comprenant une couche barrière comportant une bande barrière enroulée sur la gaine de pression. La couche barrière empêche les gaz présents à l'intérieur de la conduite ainsi que l'eau d'atteindre l'espace annulaire de la conduite flexible, c'est-à-dire l'espace défini par la gaine de pression et la gaine externe de la conduite et comprenant les éléments d'armures.

Cette solution n'est pas entièrement satisfaisante car elle n'assure pas de manière satisfaisante l'étanchéité de la couche barrière au niveau de l'embout de connexion fixé à la conduite flexible.

WO 2014/001236 A1 décrit un ensemble destiné à garantir l'intégrité d'un système d'étanchéité d'un tuyau flexible, comprenant un premier élément de collier, un second élément de collier et un premier élément d'étanchéité annulaire et un deuxième élément d'étanchéité annulaire situé sur une partie d'une couche d'étanchéité polymère d'un tuyau flexible. L'ensemble comprend un orifice s'étendant vers une zone entre le premier élément d'étanchéité et le deuxième élément d'étanchéité conçu pour mettre sous pression la zone entre le premier élément d'étanchéité et le deuxième élément d'étanchéité. Les premier et deuxième éléments d'étanchéité sont des bagues d'étanchéité possédant une section transversale comprenant une partie de type cale. Les premier et deuxième éléments d'étanchéité sont orientés selon la même direction axiale de sorte que la partie de type cale fait face à l'opposé du corps de raccord d'extrémité.

WO 99/19654 A1 décrit un tuyau souple sous pression doté d'un raccord d'extrémité ayant un orifice traversant s'étendant axialement. Le tuyau présente une structure non liée comprenant plusieurs couches comportant un revêtement intérieur en polymère extrudé s'étendant dans l'orifice traversant. Dans la surface extérieure de la partie d'extrémité du revêtement intérieur, deux rainures annulaires sont formées par laminage et deux rainures opposées sont formées dans la surface intérieure de l'anneau de blocage. La mise en place de deux clips circulaires à la fois dans les rainures du revêtement intérieur et celles de l'anneau de blocage, permet de fixer ce dernier au revêtement, après quoi l'anneau de blocage est logé dans la rainure de maintien de la paroi de l'orifice traversant du raccord d'extrémité. Le joint entre le revêtement intérieur du tuyau souple sous pression et le raccord d'extrémité est une structure simple et bon marché et confère une résistance plus élevée aux efforts de tension axiaux agissant sur le revêtement intérieur.

WO 2016/177998 A1 décrit un procédé et un appareil servant à refaire la terminaison d'une extrémité d'un tuyau flexible. Le procédé comporte l'étape consistant à retirer au moins un composant formant raccord d'extrémité d'origine en provenance d'un raccord d'extrémité à multiples composants, assujetti sur un corps de tuyau flexible au niveau d'une extrémité d'un tuyau flexible, l'étape consistant à laisser une partie de retenue du raccord d'extrémité en place et l'étape consistant à assujettir par la suite au moins un composant formant raccord d'extrémité de remplacement sur la partie de retenue, pour ainsi mettre en oeuvre un nouveau joint étanche au fluide contre une couche de retenue de fluide du tuyau flexible au niveau d'un nouvel emplacement d'étanchéité déplacé dans le sens axial par rapport à un emplacement d'étanchéité d'origine.

WO 2013/074098 A1 décrit un embout et un procédé d'installation de l'embout sur un tuyau flexible. Le procédé consiste à disposer un mandrin d'enveloppe à une extrémité libre du tuyau flexible à l'extérieur d'une chemise du tuyau flexible et à effectuer une taille de couches du tuyau flexible pour exposer une gaine à pression interne du tuyau flexible. Une couche de blindage du tuyau flexible part radialement vers l'extérieur depuis une direction axiale du tuyau flexible. Au moins un composant de transition de confinement de pression interne et au moins un joint de gaine de pression interne sont installés sur l'extrémité libre exposée du tuyau flexible. L'embout est assemblé de sorte que le ou les composants de transition de confinement de pression interne et au moins un joint soient assemblés à l'aide d'organes de fixation non radiaux ayant une direction tournée vers l'arrière.

Un but de l'invention est donc d'obtenir un embout de connexion qui permette d'assurer une bonne étanchéité de la couche barrière de manière à limiter, au niveau de l'embout de connexion, le risque de migration des composés agressifs vers l'espace annulaire.

A cet effet, l'invention a pour objet un embout de connexion selon la revendication 1.

L'embout de connexion selon l'invention peut comprendre une ou plusieurs des caractéristiques des revendications 2 à 13, prise(s) isolément ou selon toute combinaison techniquement possible.

L'invention concerne également une conduite flexible de transport de fluide selon la revendication 14.

L'invention porte aussi sur un procédé de montage d'un embout selon la revendication 15.

Le procédé selon l'invention peut comprendre une ou plusieurs des caractéristiques des revendications 16 à 18.

L'invention sera mieux comprise, à la lecture de la description qui va suivre, donnée uniquement à titre d'exemple, et faite en se référant aux dessins annexés, sur lesquels :
- la figure 1 est une vue en perspective partiellement écorchée d'un tronçon central d'une conduite flexible comprenant une couche barrière ;
- la figure 2 est une vue schématique, prise en coupe suivant un plan axial médian, d'un embout de connexion d'une conduite flexible selon un premier mode de réalisation de l'invention ;
- la figure 3 est une vue schématique d'une portion détaillée de l'embout de la figure 2 ;
- la figure 4 est une vue en perspective de la bague d'étanchéité de l'embout de la figure 2 ;
- les figures 5, 6 et 7 sont des vues en perspective de l'embout de la figure 2 à différentes étapes de montage,
- la figure 8 est une vue schématique simplifiée, prise en coupe suivant un plan axial médian, d'un embout de connexion d'une conduite flexible selon un deuxième mode de réalisation de l'invention.

Dans tout ce qui suit, les termes « extérieur » et « intérieur » s'entendent généralement de manière radiale par rapport à un axe longitudinal X-X' de la conduite, le terme « extérieur » s'entendant comme relativement plus éloigné radialement de l'axe X-X' et le terme « intérieur » s'entendant comme relativement plus proche radialement de l'axe X-X' de la conduite.

Les termes « avant » et « arrière » s'entendent de manière axiale par rapport à un axe X-X' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

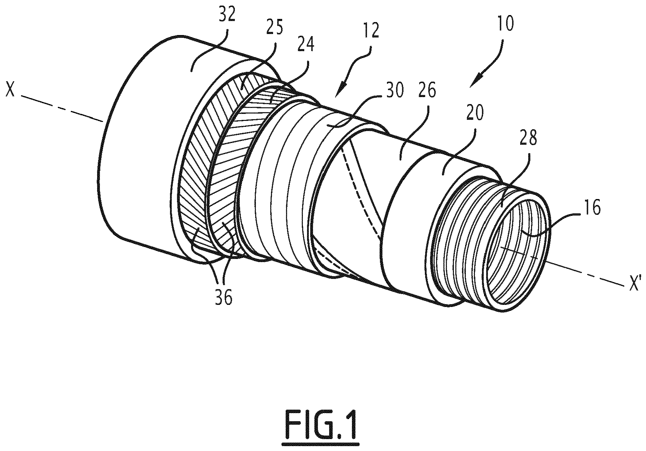

Une conduite flexible 10 selon l'invention est illustrée partiellement par la figure 1.

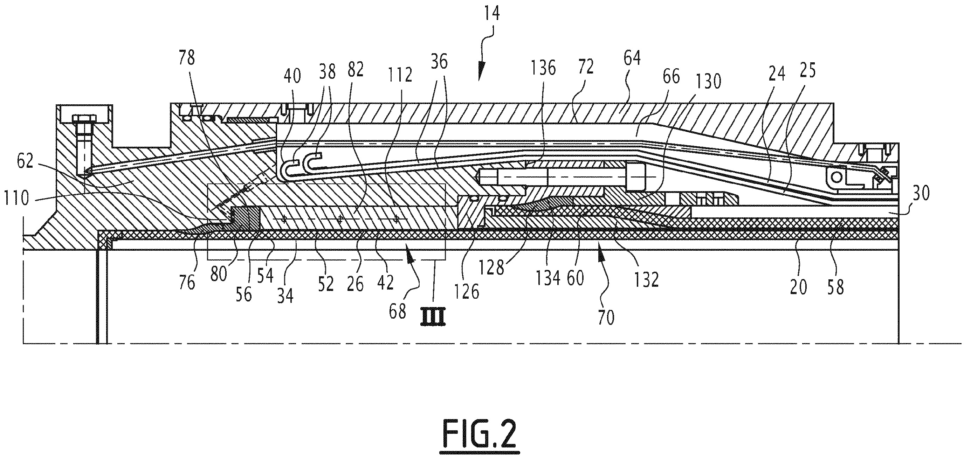

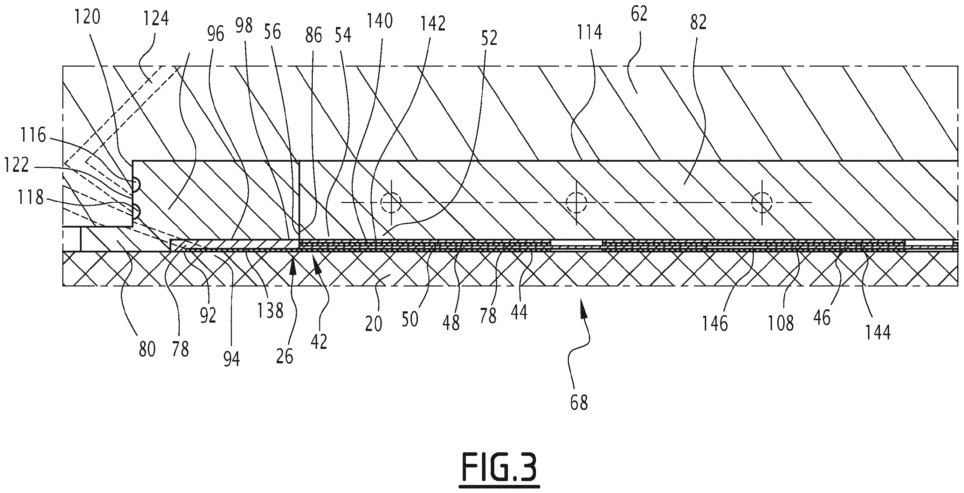

La conduite flexible 10 comporte un tronçon central 12 illustré en partie sur la figure 1. Elle comporte, à chacune des extrémités axiales du tronçon central 12, un embout de connexion 14 (non visible sur la Figure 1) dont les parties pertinentes sont représentées sur les figures 2 et 3.

En référence à la figure 1, la conduite 10 délimite un passage central 16 de circulation d'un fluide, avantageusement d'un fluide pétrolier, comme par exemple du pétrole et/ou du gaz naturel. Le fluide comprend des composés agressifs comme par exemple du dioxyde de carbone. Le passage central 16 s'étend suivant un axe X-X', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), APl 17J, 4^{ème} édition, Mai 2014 et API RP17B, 5^{ème} édition, Mai 2014.

Comme illustré par la figure 1, la conduite 10 délimite une pluralité de couches concentriques autour de l'axe X-X', qui s'étendent continûment le long du tronçon central 12 jusqu'aux embouts de connexion 14 situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20.

Selon l'invention, la conduite comprend une couche barrière 26 à la perméation des fluides qui est ici interposée entre la gaine de pression 20 et la ou les couches les plus interne(s) des couches d'amures de traction 24, 25.

Avantageusement, et selon l'utilisation souhaitée, la conduite 10 comporte en outre une carcasse interne 28 disposée à l'intérieur de la gaine de pression 20, une voûte de pression 30 intercalée entre la gaine de pression 20 et la ou les couches d'armures de traction 24, 25 et plus particulièrement entre la couche barrière 26 et la ou les couches d'armures de traction 24, 25. La conduite 10 comporte en outre une gaine externe 32, destinée à la protection de la conduite 10.

De manière connue, la gaine de pression 20 est destinée à confiner de manière étanche le fluide transporté dans le passage central 16. Elle est formée en matériau polymère, par exemple à base d'une polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La gaine de pression 20 comporte une région avant 34 insérée dans l'embout 14.

La carcasse interne 28, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 28 est disposée à l'intérieur de la gaine de pression 20. La conduite est alors désignée par le terme anglais « rough bore » en raison de la géométrie de la carcasse interne 28.

En variante (non représentée), la conduite flexible 10 est dépourvue de carcasse interne 28, elle est alors désignée par le terme anglais « smooth bore ».

L'enroulement hélicoïdal du feuillard métallique profilé formant la carcasse interne 28 est à pas court, c'est-à-dire qu'il présente un angle d'hélice de valeur absolue proche de 90°, typiquement compris entre 75° et 90°.

Dans cet exemple, la voûte de pression 30 est destinée à reprendre les efforts liés à la pression régnant à l'intérieur de la gaine de pression 20. Elle est par exemple formée d'un fil profilé métallique entouré en hélice autour de la gaine de pression 20. Le fil profilé présente généralement une géométrie complexe, notamment en forme de Z, de T, de U, de K, de X ou de I.

La voûte de pression 30 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 36 allongé.

Dans l'exemple représenté sur la figure 1, la conduite flexible 10 comporte une pluralité de couches d'armures 24, 25, notamment une couche d'armures intérieure 24, appliquée sur la voûte de pression 30 (ou sur la gaine de pression 20 ou la couche barrière 26 lorsque la voûte 30 ou la couche barrière 26 est absente) et une couche d'armures extérieure 25 autour de laquelle est disposée la gaine extérieure 32. La conduite flexible 10 peut comprendre quatre couches d'armures 24, 25.

Chaque couche d'armures 24, 25 comporte des éléments d'armure 36 longitudinaux enroulés à pas long autour de l'axe X-X' de la conduite 10.

Par « enroulé à pas long », on entend que la valeur absolue de l'angle d'hélice est inférieure à 60°, et est typiquement comprise entre 25° et 55°.

Les éléments d'armure 36 d'une première couche 24 sont enroulés généralement suivant un angle opposé par rapport aux éléments d'armure 36 d'une deuxième couche 25. Ainsi, si l'angle d'enroulement des éléments d'armure 36 de la première couche 24 est égal à + α, α étant compris entre 25° et 55°, l'angle d'enroulement des éléments d'armure 36 de la deuxième couche d'armure 25 disposée au contact de la première couche d'armures 24 est par exemple égal à - α.

Les éléments d'armure 36 sont par exemple formés par des fils métalliques, notamment des fils en acier, ou par des rubans en matériau composite, par exemple des rubans renforcés de fibres de carbone.

Les éléments d'armure 36 présentent chacun un tronçon d'extrémité 38 introduit dans l'embout 14. Le tronçon d'extrémité 38 s'étend jusqu'à une extrémité libre 40 disposée dans l'embout 14. Il présente avantageusement une trajectoire pseudo-hélicoïdale d'axe X-X' dans l'embout 14, l'hélice s'enroulant sur une enveloppe conique.

Dans l'exemple de la figure 2, pour chaque couche d'armures 24, 25, les tronçons d'extrémité 38 des éléments d'armure 36 s'étendent de manière divergente à l'écart de l'axe X-X', puis convergente vers l'axe X-X' depuis un point de décollement arrière vers l'extrémité libre 40.

La gaine externe 32 est destinée à empêcher la perméation de fluide depuis l'extérieur de la conduite flexible 10 vers l'intérieur. Elle est avantageusement réalisée en matériau polymère, notamment à base d'une polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 32 est par exemple comprise entre 5 mm et 15 mm.

Comme partiellement visible sur la figure 1, la couche barrière 26 comprend une bande barrière 42 enroulée hélicoïdalement selon l'axe X-X'.

Préférentiellement, la couche barrière 26 comprend un système de verrouillage (non représenté) pour engager les bords de la bande barrière 42 entre eux.

La couche barrière 26 présente une forme cylindrique d'axe X-X' définissant une cavité cylindrique. La cavité cylindrique s'étend selon l'axe X-X' entre l'extrémité amont et l'extrémité aval de la conduite 10.

La bande barrière 42 comprend une surface intérieure dirigée vers la cavité cylindrique et une surface extérieur dirigée vers l'extérieur de la cavité cylindrique.

Préférentiellement, l'enroulement hélicoïdal de la bande barrière 42 définit une région de recouvrement. La région de recouvrement s'étend le long d'un bord longitudinal extérieur de la bande barrière et un bord longitudinal intérieur de la bande barrière.

La bande barrière 42 est enroulée hélicoïdalement à pas court autour de la gaine de pression 20, c'est-à-dire, avec une valeur absolue de l'angle d'hélice typiquement comprise entre 75° et 90°.

La largeur de la région de recouvrement, prise parallèlement à l'axe X-X', est typiquement comprise entre 2 cm et 10 cm, avec une valeur habituelle de 6 cm.

La largeur de la bande barrière 42 est avantageusement sélectionnée selon l'angle d'hélice de la bande barrière 42 préféré et selon la largeur de la région de recouvrement.

La bande barrière 42 comprend au moins une couche polymérique 44, 48 et une couche métallique 46, 50 assemblée sur la couche polymérique 44, 48.

En variante (non représenté), la bande barrière 42 comprend deux couches polymériques 44, 48 et une couche métallique 46, 50 insérée entre les couches polymériques 44, 48, selon une configuration « en sandwich ».

Dans les modes de réalisations des figures 2 et 3, la bande barrière 42 comprend une couche polymérique intérieure 44, une couche métallique intermédiaire 46 assemblée sur la couche polymérique intérieure 44, une couche polymérique intermédiaire 48 assemblée sur la couche métallique intermédiaire 46 et une couche métallique extérieure 50 assemblée sur la couche polymérique intermédiaire 48.

La ou les couches polymérique(s) 44, 48 sont avantageusement formées d'une polyoléfine, comme par exemple du polyéthylène ou du polypropylène ; un polyamide, comme par exemple le polyamide-11 (PA-11) ou polyamide-12 (PA-12) ; un polymère fluoré comme le polyfluorure de vinylid-ne (PVDF) ; un polyimide (PI) ; un polyuréthane (PU) ; une polyurée ; un polyester ; un polyacétal ; un polyéther, comme par exemple un polyéther sulfone (PES) ; un polyoxide ; un polysulfide, comme par exemple le polysulfure de phénylène (PPS) ; un polysulphone, comme par exemple la polyarylsulfone (PAS) ; un polyacrylate ; le polytéréphtalate d'éthylène (PET) ; le polyétheréthercétone (PEEK) ; un polyvinyl ; un polyacrylonitrile ; le polyéthercétonecétone (PEKK) ; et copolymère des précédents.

Avantageusement, la ou les couche(s) polymérique(s) 44, 48 sont extrudées.

L'épaisseur de la ou les couche(s) polymérique(s) 44, 48 est, par exemple, comprise entre 0.1 mm et 20 mm, préférentiellement entre 1 mm et 20 mm et avantageusement proche de 12 mm.

La couche métallique intermédiaire 46 et la couche métallique extérieure 50 est avantageusement une couche de film métallique, comme par exemple un film en aluminium, un film en acier inoxydable, un film en acier duplex, un film en titane, un film en nickel ou un film en chrome.

Les couches métalliques 46, 50 de la bande barrière 42 est par exemple une couche de métal obtenue avantageusement par un procédé de déposition, comme par exemple un dépôt chimique en phase vapeur (ou CVD en langue anglaise pour « chemical vapor déposition »).

L'épaisseur de la couche de métal est préférentiellement inférieure à 1 mm, avantageusement comprise entre 0,01 µm et 500 µm.

La couche barrière 26 comprend une région terminale 52 insérée dans l'embout 14. Plus particulièrement, la bande barrière 42 de la couche barrière 26 comprend une extrémité 54 définissant un bord libre 56 disposé dans l'embout 14.

La conduite 10 peut comprendre des couches supplémentaires, par exemple :
- une couche anti-usure (généralement en polymère) entre les couches métalliques (notamment entre la voûte de pression 30 et la couche d'armure 24, ou entre les deux couches d'armure 24 et 25), qui permet d'éviter les frictions des couches métalliques entre elles qui peuvent provoquer leur détérioration,
- une couche polymérique intermédiaire, et/ou
- une couche polymérique d'isolation thermique.

Dans l'exemple des figures 2 et 3, la conduite 10 comprend en outre une couche d'isolation 58 disposée extérieurement sur la couche barrière 26. La couche d'isolation 58 est une couche d'étanchéité permettant de renforcer l'étanchéité de la conduite.

La couche d'isolation 58 est préférentiellement une couche polymérique.

La couche d'isolation 58 maintient en appui la couche barrière 26 sur la gaine de pression 20.

La couche d'isolation 58 comprend une région avant 60 insérée dans l'embout 14.

Comme illustré plus en détail par la figure 2, outre la région avant 34 de la gaine de pression 20, les tronçons d'extrémité 38 des éléments d'armure 36, la région terminale 52 de la couche barrière 26, la région avant 60 de la couche d'isolation 58, l'embout de connexion 14 comporte une voûte d'extrémité 62 et un capot extérieur de liaison 64 faisant saillie axialement vers l'arrière à partir de la voûte 62. Le capot 64 délimite, avec la voûte d'extrémité 62 et la voûte de pression 30 un espace intermédiaire 66 recevant les tronçons d'extrémité 38 des éléments d'armure 36.

L'embout de connexion 14 comporte, en outre, un ensemble avant 68 d'étanchéité autour de la couche barrière 26 et plus particulièrement au niveau de la région terminale 52 de la couche barrière 26, un ensemble intermédiaire 70 d'étanchéité autour de la couche d'isolation 58, et un ensemble arrière d'étanchéité autour de la gaine externe 32 (non représenté).

Dans cet exemple, la voûte d'extrémité 62 est destinée à raccorder la conduite 10 à un autre embout de connexion 14 ou à des équipements terminaux, avantageusement par l'intermédiaire d'une bride d'extrémité.

Le capot 64 comporte une paroi périphérique 72 tubulaire s'étendant autour de l'axe X-X'. La paroi périphérique 72 présente un bord arrière 74 s'étendant axialement vers l'arrière au-delà de la voûte d'extrémité 62.

Le capot 64 délimite l'espace intermédiaire 66 radialement vers l'extérieur. La voûte d'extrémité 62 et la région avant 34 de la gaine de pression 20 délimitent l'espace intermédiaire 66 radialement vers l'intérieur.

L'espace intermédiaire 66 est avantageusement rempli d'un matériau de remplissage destiné à ancrer les tronçons d'extrémité 38 des éléments d'armures 36 dans l'espace intermédiaire 66.

Le matériau de remplissage est par exemple formé d'une résine thermodurcissable ou d'une résine thermoplastique. La résine thermodurcissable est par exemple une résine époxy, une résine de type polyimide, une résine polyuréthane ou tout autre thermodurcissable convenant à la présente application. En variante, la résine thermoplastique est par exemple choisie parmi les résines polyamide, polyoléfine, polyester, polyétheréthercétone, polyéthercétonecétone, polyimide, polystyrène, polymère fluoré thermoplastique tel que le polyfluorure de vinylidène, le polytétrafluoroéthylène ou tout autre thermoplastique convenant à la présente application. En variante encore, la résine est une résine Araldite^{®}.

L'ensemble avant 68 d'étanchéité est situé à l'avant de l'embout de connexion 14, en contact avec la voûte d'extrémité 62.

L'ensemble avant 68 d'étanchéité comporte une bague avant 76 de sertissage, destinée à venir en prise sur la gaine de pression 20, une bague d'étanchéité 78 disposée sur la gaine de pression 20 à l'avant du bord libre 56 de la bande barrière 42 selon la direction longitudinale, une bride avant de serrage 80 destinée à maintenir la bague d'étanchéité 78 sur la gaine de pression 20, et un collier de serrage 82 destiné à maintenir la région terminale 52 de la couche barrière 26 en appui sur la gaine de pression 20 (figure 2).

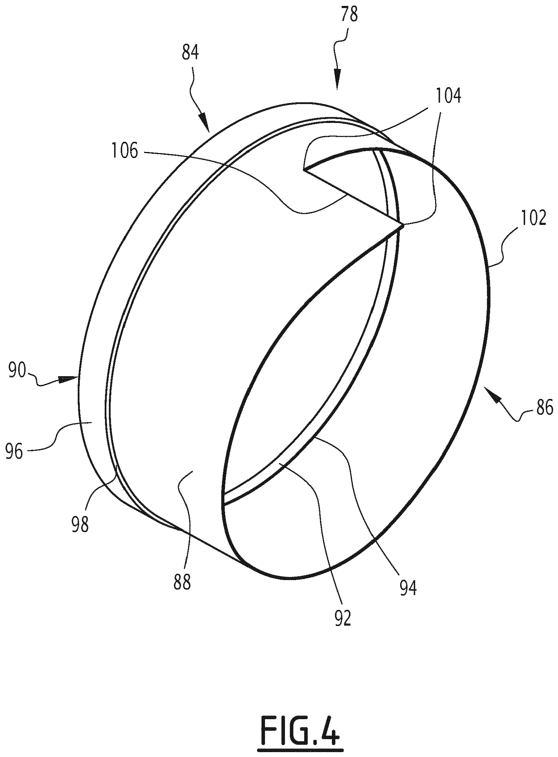

La bague d'étanchéité 78 est représentée plus en détail sur la figure 4.

La bague d'étanchéité 78 est préférentiellement métallique. Par exemple, la bague d'étanchéité 78 est faite en acier inoxydable ou en acier au carbone.

Préférentiellement, la bague d'étanchéité 78 est réalisée dans le même matériau que la couche métallique intermédiaire 46 de la couche barrière 26.

La bague d'étanchéité 78 comprend une extrémité avant 84 et une extrémité arrière 86 reliées par un tronçon cylindrique 88 plein (figure 4).

L'extrémité avant 84 définit un bord 90 avant sensiblement circulaire. L'extrémité avant 84 comprend une couronne périphérique 92 intérieure en appui sur la gaine de pression 20 définissant un épaulement 94 avant et une couronne périphérique 96 extérieure définissant un épaulement 98 arrière.

L'épaisseur de l'épaulement 94 avant est avantageusement égale à l'épaisseur de la couche polymérique intérieure 44 de la couche barrière 26. La couche polymérique intérieure 44 est en butée contre la couronne périphérique 92 intérieure.

L'épaisseur de l'épaulement 98 arrière est avantageusement égale à l'épaisseur cumulée de la couche polymérique intermédiaire 48 et de la couche métallique extérieure 50 de la couche barrière 26. La couche polymérique intermédiaire 48 et la couche métallique extérieure 50 sont en butée contre la couronne périphérique 96 extérieure.

L'extrémité arrière 86 de la bague d'étanchéité 78 définit un bord arrière de forme complémentaire au bord libre 56 de l'extrémité de la bande barrière 42.

Plus précisément, le bord libre 56 de l'extrémité de la bande barrière 42 et le bord arrière de la bague d'étanchéité 78 présentent chacun au moins une portion hélicoïdale 102.

La portion hélicoïdale 102 comprend deux terminaisons 104 sensiblement alignées selon une direction parallèle à l'axe X-X' de la conduite 10.

Le bord arrière de la bague d'étanchéité 78 comprend en outre une portion rectiligne 106 reliant les deux terminaisons 104 de la portion hélicoïdale 102. La portion rectiligne 106 est sensiblement parallèle à l'axe X-X' de la conduite 10. Alternativement, la portion rectiligne 106 est perpendiculaire à l'axe X-X' de la conduite 10.

La portion rectiligne 106 présente une longueur sensiblement égale à la largeur de la bande barrière 42 et plus particulièrement à la largeur de la couche métallique intermédiaire 46 de la bande barrière 42.

Le bord arrière de la bague d'étanchéité 78 est fixé au moins en partie sur le bord libre 56 de la bande barrière 42 et plus particulièrement sur le bord libre 108 de la couche métallique intermédiaire 46 de la bande barrière 42. Le bord arrière de la bague d'étanchéité 78 et le bord libre 56 de la bande barrière 42 sont maintenus en appui circonférentiellement l'un sur l'autre.

La bague d'étanchéité 78 recouvre la couche polymérique intérieure 44 d'une partie de la région terminale 52 de la couche barrière 26.

Avantageusement, au moins une partie du bord arrière de la bague d'étanchéité 78 est fixée sur au moins une partie du bord libre 56 de la bande barrière 42 par soudage.

Dans l'exemple des figures 2 et 3, la portion rectiligne 106 du bord arrière de la bague d'étanchéité 78 est soudée au bord libre 56 de la bande barrière 42 et plus particulièrement au bord libre de la couche métallique intermédiaire 46 de la bande barrière 42.

Préférentiellement, le soudage est bout à bout.

En variante, la totalité du bord arrière de la bague d'étanchéité 78 est soudée au bord libre 56 de la bande barrière 42.

La bride avant 80 de serrage est rapportée sur une surface transversale avant 110 de la voûte d'extrémité 62.

En variante, la bride avant 80 de serrage est venue de matière avec la bague d'étanchéité 78.

La bride avant 80 de serrage pousse axialement la bague avant de sertissage 76 vers l'avant pour que celle-ci exerce une pression radiale sur la région avant 34 de la gaine de pression 20. En particulier, le déplacement de la bague avant 76 de sertissage contre une surface inclinée de la voûte 62 déplace radialement la bague avant 76 de sertissage, de sorte que cette dernière est prise radialement sur la gaine de pression 20.

Le collier de serrage 82 est disposé entre la bride avant 80 de serrage et l'ensemble intermédiaire d'étanchéité 70 selon l'axe X-X'.

Le collier de serrage 82 comprend une surface extérieure 112 en appui avec une surface longitudinale 114 de la voûte 62.

L'épaisseur radiale du collier de serrage 82 est sensiblement égale à l'épaisseur de la bride avant 80 de serrage.

Le collier de serrage 82 est par exemple un collier comprenant une pluralité d'organes circonférentiels (non représentés). Chaque organe circonférentiel a la forme d'une plaque courbée.

Par exemple, le collier de serrage 82 comprend trois organes circonférentiels.

Les organes circonférentiels sont répartis le long du périmètre d'une même section transversale de la couche barrière 26. Ainsi, les organes circonférentiels sont disposés adjacents les uns aux autres sur le pourtour de la couche barrière 26 au niveau de la région terminale 52.

Les organes circonférentiels sont par exemple réalisés en acier.

L'ensemble avant d'étanchéité 68 comprend en outre un premier joint torique 116 et un deuxième joint torique 118 délimitant avec la surface transversale avant 110 de la voûte 62 et une surface transversale avant 120 de la bride avant de serrage 80 un volume 122 de test d'étanchéité.

Le premier joint torique 116 et le deuxième joint torique 118 sont disposés en appui entre la surface transversale avant 120 de la bride avant de serrage 80 et la surface transversale avant 110 de la voûte 62. L'ensemble avant d'étanchéité 68 comprend en outre un canal 124 de test d'étanchéité connecté au volume 122 de test d'étanchéité.

L'ensemble intermédiaire d'étanchéité 70 est disposé selon l'axe X-X' entre l'ensemble avant d'étanchéité 68 et l'ensemble arrière d'étanchéité, en contact avec la voûte 62.

L'ensemble intermédiaire d'étanchéité 70 comprend une bride intermédiaire 126 de sertissage, une bague intermédiaire 128 de sertissage, une bride intermédiaire 130 de serrage et avantageusement une canule intermédiaire 132 d'appui interposée entre la couche barrière 26 et la couche d'isolation 58.

La bague intermédiaire 128 de sertissage est interposée entre une surface arrière 134 de la bride intermédiaire de sertissage et la couche d'isolation 58.

La bride intermédiaire 130 de serrage est fixée sur une surface transversale 136 arrière de la voûte 62. Elle pousse vers l'avant la bague intermédiaire 128 de sertissage pour la comprimer et sertir la couche d'isolation 58.

La couche d'isolation s'appuie sur la canule intermédiaire.

L'ensemble arrière d'étanchéité (non représenté) comprend par exemple une bague arrière de sertissage sertissant la gaine externe, et une bride arrière de serrage de la bague arrière, fixée sur le capot.

Le procédé de montage de l'embout 14 de connexion de la conduite flexible 10 va maintenant être décrit.

Initialement, le procédé comprend la fourniture de la conduite flexible 10. Une région avant 34 de la gaine de pression 20 est dénudée.

La région avant 138 de la couche polymérique intérieure 44 de la couche barrière 26 est également dénudée.

La région avant 140 de la couche polymérique intermédiaire 48 et la région avant 142 de la couche métallique extérieure 50 sont écartées radialement de la région avant 144 de la couche métallique intermédiaire 46 tout en restant solidaires de la bande barrière 42. Ceci permet de faire apparaître la couche métallique intermédiaire 46 à nu.

Le procédé comprend la fourniture d'une bague d'étanchéité 78.

La bague d'étanchéité 78 est ensuite mise en place sur la gaine de pression 20. Plus particulièrement, la bague d'étanchéité 78 est disposée de sorte à recouvrir la région avant 138 de couche polymérique intérieure 44 de la couche barrière 42. La bague d'étanchéité 78 est disposée de sorte que la région avant 138 de la couche polymérique intérieure 44 soit en appui contre l'épaulement avant 94 de la couronne périphérique intérieure 92.

Le bord arrière de la bague d'étanchéité 78 est ensuite fixé sur le bord libre 56 de l'extrémité 54 de la bande barrière 42 et plus précisément sur le bord libre 108 de la couche métallique intermédiaire 46 de la bande barrière 42.

Avantageusement, le procédé comprend une étape de soudage, de préférence bord à bord, du bord arrière de la bague d'étanchéité 78 et du bord libre 108 de l'extrémité 54 de la bande barrière 42 de la conduite 10, et plus particulièrement du bord libre 108 de la couche métallique intermédiaire 46 de la bande barrière 42.

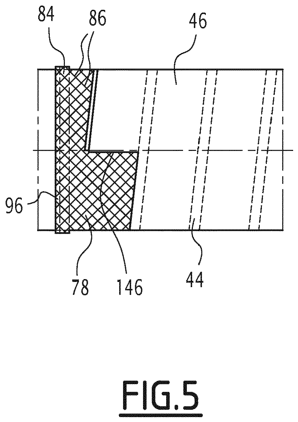

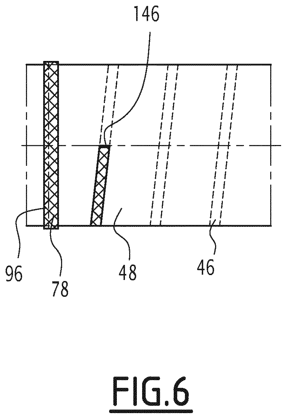

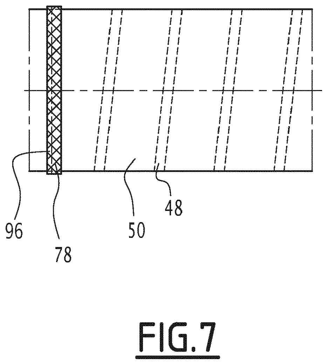

Comme représenté sur les figures 5 à 7, la région avant 140 de la couche polymérique intermédiaire 48 et la région avant 142 de la couche métallique extérieure 50 sont ensuite rabattues sur la bague d'étanchéité 78 et sur la soudure 146. La région avant 140 de la couche polymérique intermédiaire 48 et la région avant 142 de la couche métallique extérieure 50 comprennent chacune un bord 148 avant en contact avec l'épaulement arrière 98 de la couronne périphérique extérieure 96.

La bride avant 80 de serrage, lorsqu'elle n'est pas venue de matière avec la bague d'étanchéité 78, et le collier de serrage 82 sont ensuite montés respectivement autour de la bague d'étanchéité 78 et de la couche barrière 26.

Puis, la bague avant 76 de sertissage est insérée autour de la région avant 34 de la gaine de pression 20.

La voûte d'extrémité 62 est ensuite mise en place.

L'ensemble intermédiaire d'étanchéité 70 est ensuite mis en place puis activé par serrage sur le voûte 62.

En variante, l'ensemble intermédiaire d'étanchéité 70 est mis en place avant l'ensemble avant d'étanchéité 68.

Le capot 64 est ensuite disposé et fixé sur la voûte 62.

L'ensemble arrière d'étanchéité est ensuite fixé et activé par serrage sur le capot 64.

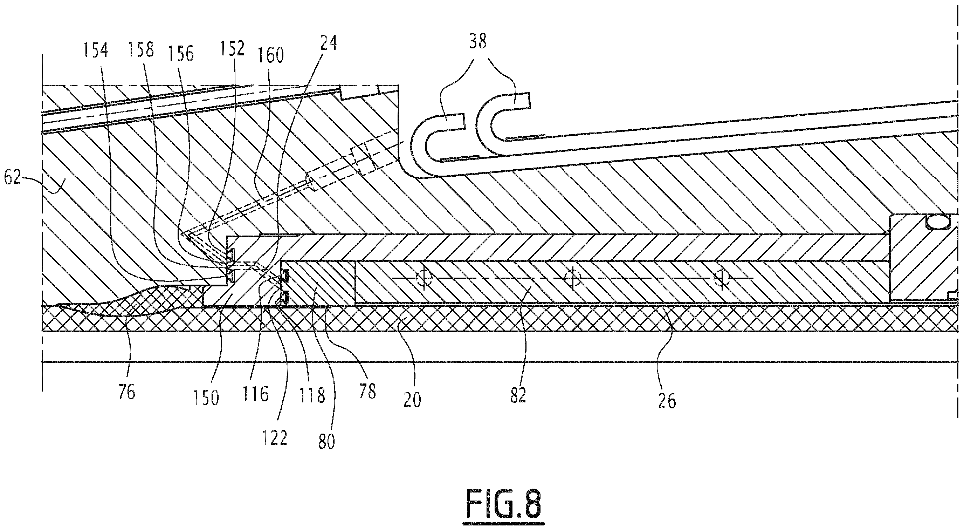

La figure 8 présente un embout de connexion 14 selon un deuxième mode de réalisation de l'invention.

A la différence de l'embout de connexion 14 du premier mode de réalisation, l'ensemble avant d'étanchéité 68 de l'embout de connexion 14 du deuxième mode de réalisation comprend en outre une chaussette 150 disposée entre la voûte d'extrémité 62 et la gaine de pression 20.

La chaussette 150 recouvre la bride avant de serrage 80 et le collier de serrage 82.

La chaussette 150 comprend un premier joint torique 152 et un deuxième joint torique 154 délimitant avec la surface transversale avant 110 de la voûte 62 et une surface transversale avant 156 de la chaussette 150 un volume 158 de test d'étanchéité.

Le premier joint torique 152 et le deuxième joint torique 154 sont disposés en appui entre la surface transversale avant 156 de la chaussette 150 et la surface transversale avant 110 de la voûte 62. L'ensemble avant d'étanchéité 68 comprend alors en outre un canal 160 de test d'étanchéité connecté au volume 158 de test d'étanchéité.

Les volumes 122, 158 de test d'étanchéité et les canaux 124, 160 de test d'étanchéité de la bague avant 76 de serrage et de la chaussette 150 sont préférentiellement connectés fluidiquement.

La chaussette 150 facilite le procédé de montage de l'embout de connexion 14.

Le procédé de montage de l'embout de connexion 14 est semblable au procédé décrit plus haut à l'exception qu'il comprend, avant la mise en place de la voûte d'extrémité 62, la mise en place de la chaussette 150 sur la bride avant de serrage 80 et le collier de serrage 82.

## Revendications

1. Embout de connexion (14) d'une conduite flexible (10) de transport de fluide comprenant :
- une voûte d'extrémité (62) et un capot extérieur (64) de liaison délimitant un espace intermédiaire (66),
- au moins une région avant (34) d'une gaine de pression (20) définissant un passage central (16) pour le transport de fluide, le passage central (16) s'étendant selon une direction longitudinale (X-X'), la région avant (34) étant insérée dans le capot extérieur (64),
- au moins des tronçons d'extrémité (38) d'une couche d'armure de traction (24, 25) disposée autour de la gaine de pression (20), insérés dans l'espace intermédiaire (66),
- au moins une région terminale (52) d'une couche barrière (26) à la perméation des fluides disposée entre la gaine de pression (20) et la couche d'armure de traction (24, 25), la couche barrière (26) comprenant au moins une bande barrière (42) enroulée sur la gaine de pression (20), la bande barrière (42) comprenant une extrémité (40) définissant un bord libre (56) disposé dans le capot extérieur (64),
l'embout de connexion (14) comprenant une bague d'étanchéité (78) disposée sur la gaine de pression (20) à l'avant du bord libre (56) de la bande barrière (42) selon la direction longitudinale (X-X'), la bague d'étanchéité (78) comprenant une extrémité arrière (86) définissant un bord arrière de forme complémentaire au bord libre (56) de l'extrémité (40) de la bande barrière (42), le bord arrière étant fixé au moins en partie sur le bord libre (56) de la bande barrière (42), le bord arrière et le bord libre (56) étant maintenus en appui circonférentiellement l'un sur l'autre,
**caractérisé en ce que** le bord libre (56) de la bande barrière (42) et le bord arrière de la bague d'étanchéité (78) présentent chacun au moins une portion hélicoïdale (102).

2. Embout de connexion (14) selon la revendication 1, dans lequel au moins une partie du bord arrière de la bague d'étanchéité (78) est fixée sur au moins une partie du bord libre (56) de la bande barrière (42) par soudage.

3. Embout de connexion (14) selon la revendication 2, dans lequel le soudage est bout à bout.

4. Embout de connexion (14) selon l'une quelconque des revendications 1 à 3, dans lequel la bague d'étanchéité (78) comprend une extrémité avant (84) reliée à l'extrémité arrière (86) par un tronçon cylindrique (88) plein.

5. Embout de connexion (14) selon la revendication 4, dans lequel l'extrémité avant (84) définit un bord (90) avant sensiblement circulaire.

6. Embout de connexion (14) selon l'une quelconque des revendications 1 à 5, dans lequel la bande barrière (42) et la bague d'étanchéité (78) sont métalliques.

7. Embout de connexion (14) selon l'une quelconque des revendications 1 à 6, dans lequel la couche barrière (26) comprend au moins une couche polymérique (44) en contact avec la gaine de pression (20), la bague d'étanchéité (78) étant disposée en contact sur ladite couche polymérique (44).

8. Embout de connexion (14) selon l'une quelconque des revendications 1 à 7, dans lequel l'extrémité avant (84) de la bague d'étanchéité (78) comprend au moins une couronne périphérique (92, 96) définissant un épaulement (94, 98).

9. Embout de connexion (14) selon la revendication 8, dans lequel la couche barrière (26) comprend au moins une couche polymérique (48) et/ou au moins une couche métallique (50) disposée au-dessus de la bague d'étanchéité (78), la couronne périphérique (96) de la bague d'étanchéité (78) étant en butée contre la couche polymérique (48) et/ou la couche métallique (50) au niveau de l'épaulement (98).

10. Embout de connexion (14) selon l'une quelconque des revendications 1 à 9, comprenant en outre une bride avant de serrage (80) disposée sur au moins une partie de la bague d'étanchéité (78) et/ou d'un collier de serrage (82) autour d'une partie de la région terminale (52) de bande barrière (42) en contact avec la bride avant de serrage (80).

11. Embout de connexion (14) selon la revendication 10, dans laquelle la bride avant de serrage (80) est venue de matière avec la bague d'étanchéité (78).

12. Embout de connexion (14) selon la revendication 10 ou 11, comprenant en outre une chaussette (150) disposée autour de la bride avant de serrage (80) et/ou du collier de serrage (82).

13. Embout de connexion selon l'une quelconque des revendications 10 à 12, comprenant au moins un canal (124, 160) de test d'étanchéité, ledit canal (124, 160) étant en contact avec une surface transversale avant (120, 156) de la bride avant de serrage (80) ou de la chaussette (150).

14. Conduite flexible (10) de transport de fluide comprenant :
- au moins une gaine de pression (20) définissant un passage central (16) pour le transport de fluide, le passage central (16) s'étendant selon une direction longitudinale (X-X'),
- au moins une couche d'armure de traction (24, 25) disposée autour de la gaine de pression (20),
- au moins une couche barrière (26) à la perméation des fluides disposée entre la gaine de pression (20) et la couche d'armure de traction (24, 25), comprenant au moins une bande barrière (42) enroulée sur la gaine de pression (20),
- un embout de connexion (14) selon l'une quelconque des revendications 1 à 13.

15. Procédé de montage d'un embout de connexion (14) selon l'une quelconque des revendications 1 à 13, le procédé comprenant les étapes de :
- fourniture d'une conduite flexible (10),
- fourniture d'une bague d'étanchéité (78) comprenant une extrémité arrière (86) définissant un bord arrière de forme complémentaire au bord libre (56) de l'extrémité (54) de la bande barrière (42),
- mise en place de la bague d'étanchéité (78) sur la gaine de pression (20) et fixation du bord arrière de la bague d'étanchéité (78) sur le bord libre (56) de l'extrémité (54) de la bande barrière (42) de la conduite (10).

16. Procédé de montage selon la revendication 15, comprenant en outre une étape de soudage, de préférence bord à bord, du bord arrière de la bague d'étanchéité (78) et du bord libre (56) de l'extrémité (54) de la bande barrière (42) de la conduite (10).

17. Procédé selon la revendication 15 ou 16, comprenant la mise en place d'une bride avant de serrage (80) sur au moins une partie de la bague d'étanchéité (78) et/ou d'un collier de serrage (82) autour d'une partie de la région terminale (52) de la bande barrière (42) en contact avec la bride avant de serrage (80).

18. Procédé selon la revendication 17 comprenant la mise en place d'une chaussette (150) autour de la bride avant de serrage (80) et/ou du collier de serrage (82).

## Patentansprüche

1. Verbindungsendstück (14) einer flexiblen Leitung (10) zum Transport von Fluid, umfassend:
- eine Endwölbung (62) und eine äußere Verbindungsabdeckung (64), die einen Zwischenraum (66) begrenzt,
- mindestens einen vorderen Bereich (34) einer Druckhülle (20), der einen mittleren Durchgang (16) für den Transport von Fluid definiert, wobei sich der mittlere Durchgang (16) entlang einer Längsrichtung (X-X') erstreckt, wobei der vordere Bereich (34) in die äußere Abdeckung (64) eingesetzt ist,
- mindestens Endabschnitte (38) einer Zugbewehrungsschicht (24, 25), die um den Druckmantel (20) angeordnet und in den Zwischenraum (66) eingefügt sind,
- mindestens einen Endbereich (52) einer Sperrschicht (26) gegen die Permeation von Fluiden, die zwischen dem Druckmantel (20) und der Zugbewehrungsschicht (24, 25) angeordnet ist, die Sperrschicht (26) umfassend mindestens einen Sperrstreifen (42) umfasst, der um den Druckmantel (20) gewickelt ist, der Sperrstreifen (42) umfassend ein Ende (40), das einen freien Rand (56) definiert, der in der äußeren Abdeckung (64) angeordnet ist,
das Verbindungsstück (14) umfassend einen Dichtungsring (78), der auf dem Druckmantel (20) vor dem freien Rand (56) des Sperrstreifens (42) in Längsrichtung (X-X') angeordnet ist, der Dichtungsring (78) umfassend ein hinteres Ende (86), das einen hinteren Rand definiert, der komplementär zu dem freien Rand (56) des Endes (40) des Sperrstreifens (42) geformt ist, wobei der hintere Rand zumindest teilweise an dem freien Rand (56) des Sperrstreifens (42) befestigt ist, wobei der hintere Rand und der freie Rand (56) in Umfangsrichtung aneinander anliegend gehalten werden,
**dadurch gekennzeichnet, dass** der freie Rand (56) des Sperrstreifens (42) und der hintere Rand des Dichtungsrings (78) jeweils mindestens einen schraubenförmigen Abschnitt (102) aufweisen.

2. Verbindungsendstück (14) nach Anspruch 1, wobei mindestens ein Teil des hinteren Rands des Dichtungsrings (78) an mindestens einem Teil des freien Rands (56) des Sperrstreifens (42) durch Schweißen befestigt ist.

3. Verbindungsendstück (14) nach Anspruch 2, wobei das Schweißen stumpf ist.

4. Verbindungsendstück (14) nach einem der Ansprüche 1 bis 3, wobei der Dichtungsring (78) ein vorderes Ende (84) aufweist, das durch einen massiven zylindrischen Abschnitt (88) mit dem hinteren Ende (86) verbunden ist.

5. Verbindungsendstück (14) nach Anspruch 4, wobei das vordere Ende (84) einen im Wesentlichen kreisförmigen vorderen Rand (90) definiert.

6. Verbindungsendstück (14) nach einem der Ansprüche 1 bis 5, wobei der Sperrstreifen (42) und der Dichtungsring (78) metallisch sind.

7. Verbindungsendstück (14) nach einem der Ansprüche 1 bis 6, wobei die Sperrschicht (26) mindestens eine Polymerschicht (44) umfasst, die mit dem Druckmantel (20) in Kontakt ist, wobei der Dichtungsring (78) in Kontakt auf der Polymerschicht (44) angeordnet ist.

8. Verbindungsendstück (14) nach einem der Ansprüche 1 bis 7, wobei das vordere Ende (84) des Dichtungsrings (78) mindestens einen Umfangskranz (92, 96) umfasst, der eine Schulter (94, 98) definiert.

9. Verbindungsendstück (14) nach Anspruch 8, wobei die Sperrschicht (26) mindestens eine Polymerschicht (48) und/oder mindestens eine Metallschicht (50) umfasst, die über dem Dichtungsring (78) angeordnet ist, wobei der Umfangskranz (96) des Dichtungsrings (78) an der Schulter (98) an die Polymerschicht (48) und/oder die Metallschicht (50) anstößt.

10. Verbindungsendstück (14) nach einem der Ansprüche 1 bis 9, ferner umfassend einen vorderen Klemmflansch (80), der an mindestens einem Teil des Dichtungsrings (78) und/oder eines Klemmbunds (82) um einen Teil des Endbereichs (52) des Sperrstreifens (42) angeordnet ist, der mit dem vorderen Klemmflansch (80) in Kontakt ist.

11. Verbindungsendstück (14) nach Anspruch 10, wobei der vordere Klemmflansch (80) einstückig mit dem Dichtungsring (78) ausgebildet ist.

12. Verbindungsendstück (14) nach Anspruch 10 oder 11, ferner umfassend einen Stutzen (150), der um den vorderen Klemmflansch (80) und/oder den Klemmbund (82) angeordnet ist.

13. Verbindungsendstück nach einem der Ansprüche 10 bis 12, umfassend mindestens einen Kanal (124, 160) zur Dichtheitsprüfung, wobei der Kanal (124, 160) in Kontakt mit einer vorderen Querschnittsfläche (120, 156) des vorderen Klemmflanschs (80) oder des Stutzens (150) ist.

14. Flexible Leitung (10) für Fluidtransport, umfassend:
- mindestens einen Druckmantel (20), der einen mittleren Durchgang (16) für den Transport von Fluid definiert, wobei sich der mittlere Durchgang (16) in einer Längsrichtung (X-X') erstreckt,
- mindestens eine Zugbewehrungsschicht (24, 25), die um den Druckmantel (20) angeordnet ist;
- mindestens eine zwischen dem Druckmantel (20) und der Zugbewehrungsschicht (24, 25) angeordnete Sperrschicht (26) gegen eine Permeation von Fluiden, die mindestens einen Sperrstreifen (42) umfasst, der um den Druckmantel (20) gewickelt ist,
- ein Verbindungsendstück (14) nach einem der Ansprüche 1 bis 13.

15. Montageverfahren eines Verbindungsendstücks (14) nach einem der Ansprüche 1 bis 13, das Verfahren umfassend die folgenden Schritte:
- Bereitstellen einer flexiblen Leitung (10),
- Bereitstellen eines Dichtungsrings (78), umfassend ein hinteres Ende (86), das einen hinteren Rand definiert, der komplementär zu dem freien Rand (56) des Endes (54) des Sperrstreifens (42) geformt ist,
- Aufsetzen des Dichtungsrings (78) auf den Druckmantel (20) und Befestigen des hinteren Rands des Dichtungsrings (78) an dem freien Rand (56) des Endes (54) des Sperrstreifens (42) der Leitung (10).

16. Montageverfahren nach Anspruch 15, ferner umfassend einen Schweißschritt, vorzugsweise stumpf, des hinteren Rands des Dichtungsrings (78) und des freien Rands (56) des Endes (54) des Sperrstreifens (42) der Leitung (10).

17. Verfahren nach Anspruch 15 oder 16, umfassend das Anbringen eines vorderen Klemmflanschs (80) über mindestens einen Teil des Dichtungsrings (78) und/oder eines Klemmbunds (82) um einen Teil des Endbereichs (52) des Sperrstreifens (42), der in Kontakt mit dem vorderen Klemmflansch (80) ist.

18. Verfahren nach Anspruch 17, umfassend das Anbringen eines Stutzens (150) um den vorderen Klemmflansch (80) und/oder den Klemmbund (82).

## Claims

1. A connection tip (14) of a flexible pipe (10) for transporting a fluid, comprising:
- an end arch (62) and an outer connection hood (64) delimiting an intermediate space (66),
- at least one area before (34) of a pressure duct (20) defining a central passage (16) for fluid transport, with the central passage (16) extending according to a longitudinal direction (X-X'), the front region (34) being inserted in the outer cover (64),
- at least end sections (38) of a layer of tensile armour (24, 25) arranged around the pressure duct (20), inserted in the intermediate space (66),
- at least one terminal region (52) of one barrier coat (26) to the permeation of fluids arranged between the pressure duct (20) and the layer of tensile armour (24, 25), the barrier layer (26) comprising at least one barrier strip (42) rolled on the pressure duct (20), the barrier strip (42) comprising an end (40) defining a free edge (56) arranged in the outer cover (64),
the connection tip (14) comprising a sealing ring (78) arranged on the pressure duct (20) at the front of the free edge (56) of the barrier strip (42) in the longitudinal direction (X-X'), the sealing ring (78) comprising a rear end (86) defining a rear edge of a shape complementary to the free edge (56) of the end (40) of the barrier strip (42), the rear edge being fixed at least in part to the free edge (56) of the barrier strip (42), with the rear edge and the free edge (56) being kept in circumferential abutment on each other,
**characterised in that** the free edge (56) of the barrier strip (42) and the rear edge of the sealing ring (78) each have at least one helical portion (102).

2. The connection tip (14) according to claim 1, wherein at least one part of the rear edge of the sealing ring (78) is attached to at least one part of the free edge (56) of the barrier strip (42) by welding.

3. The connection tip (14) according to claim 2, wherein the welding is butt welding.

4. The connection tip (14) according to any one of claims 1 to 3, wherein the sealing ring (78) comprises a front end (84) connected to the rear end (86) by a solid cylindrical section (88).

5. The connection tip (14) according to claim 4, wherein the front end (84) defines a substantially circular front edge (90).

6. The connection tip (14) according to any one of claims 1 to 5, wherein the barrier strip (42) and the sealing ring (78) are metallic.

7. The connection tip (14) according to any one of claims 1 to 6, wherein the barrier layer (26) comprises at least one polymeric layer (44) in contact with the pressure duct (20), the sealing ring (78) being arranged in contact on said polymeric layer (44).

8. The connection tip (14) according to any one of claims 1 to 7, wherein the front end (84) of the sealing ring (78) comprises at least one peripheral crown (92, 96) defining a shoulder (94, 98).

9. The connection tip (14) according to claim 8, wherein the barrier layer (26) comprises at least one polymeric layer (48) and/or at least one metal layer (50) arranged above the sealing ring (78), the peripheral crown (96) of the sealing ring (78) being in abutment against the polymeric layer (48) and/or the metal layer (50) at the shoulder (98).

10. The connection tip (14) according to any one of claims 1 to 9, also comprising a front tightening flange (80) arranged on at least one part of the sealing ring (78) and/or a tightening collar (82) around part of the terminal region (52) of the barrier strip (42) in contact with the front tightening flange (80).

11. The connection tip (14) according to claim 10, in which the front tightening flange (80) is made from the same part as the sealing ring (78).

12. The connection tip (14) according to claim 10 or 11, also comprising a sock (150) arranged around the front tightening flange (80) and/or the tightening collar (82).

13. The connection tip according to any of claims 10 to 12, comprising at least one channel (124, 160) of the sealing test, said channel (124, 160) being in contact with a front transverse surface (120, 156) of the front tightening flange (80) or of the sock (150).

14. A flexible pipe (10) for transporting a fluid, comprising:
- at least one pressure duct (20) defining a central passage (16) for the transport of fluid, the central passage (16) extending in a longitudinal direction (X-X'),
- at least one layer of tensile armour (24, 25) arranged around the inner sheath (20),
- at least one barrier coat (26) to the permeation of the fluids arranged between the pressure duct (20) and the layer of tensile armour (24, 25), comprising at least one barrier strip (42) winding on the pressure duct (20),
- a connection tip (14) according to any of claims 1 to 13.

15. A method of assembling a connection tip (14) according to any of claims 1 to 13, the method comprising the steps of:
- supplying a flexible pipe (10),
- supplying a sealing ring (78) comprising a rear end (86) defining an additional rear edge on the free edge (56) of the end (54) of the barrier strip (42),
- installing the sealing ring (78) on the pressure duct (20) and attaching the rear edge of the sealing ring (78) onto the free edge (56) of the end (54) of the barrier strip (42) of the pipe (10).

16. The method of assembling according to claim 15, further comprising a step of welding, preferably butt welding, of the rear edge of the sealing ring (78) and of the free edge (56) of the end (54) of the barrier strip (42) of the pipe (10).

17. The method according to claim 15 or 16, comprising the placement of a front tightening flange (80) on at least one part of the sealing ring (78) and/or a tightening collar (82) around part of the terminal region (52) of the barrier strip (42) in contact with the front tightening flange (80).

18. The method according to claim 17 comprising the placement of a sock (150) around the front tightening flange (80) and/or the tightening collar (82).
